# EUROPÄISCHE PATENTSCHRIFT

(11) **EP 1 540 428 B1**
(45) Veröffentlichungstag und Bekanntmachung des Hinweises auf die Patenterteilung: **04.10.2006**
(21) Anmeldenummer: 03747947.4
(22) Anmeldetag: 30.08.2003
(51) Int. Cl.: G05B 9/03

(54) **REDUNDANTE STEUERGERÄTEANORDNUNG**
REDUNDANT CONTROL UNIT ARRANGEMENT
SYSTEME DE DISPOSITIFS DE COMMANDE REDONDANT

(30) Priorität: 20.09.2002 DE 10243713
(43) Veröffentlichungstag der Anmeldung: 15.06.2005
(73) Patentinhaber: DaimlerChrysler AG, 70567 Stuttgart (DE)
(72) Erfinder: ARMBRUSTER, Michael, 75203 Königstein-Stein (DE); HEILMANN, Harro, 73760 Ostfildern (DE); MAISCH, Ansgar, 76275 Ettlingen (DE); ROOKS, Oliver, 71034 Böblingen (DE); SCHWARZHAUPT, Andreas, 76829 Landau (DE); SPIEGELBERG, Gernot, 71296 Heimsheim (DE); SULZMANN, Armin, 68723 Oftersheim (DE)
(86) Internationale Anmeldenummer: PCT/EP2003/009642
(87) Internationale Veröffentlichungsnummer: WO 2004/029737

(56) Entgegenhaltungen:
- EP-A- 0 573 106
- WO-A-93/25945
- WO-A-02/055356
- DE-A- 19 612 423
- DE-A- 19 631 309
- DE-A- 19 915 253
- DE-C- 10 002 519
- US-A- 5 515 282

## Beschreibung

Die Erfindung betrifft Steuergeräteanordnung mit mehreren über einen ersten Datenbus vernetzten Steuergeräten und einen Datenbustrennschalter.

Sicherheitsrelevante Systeme in "Drive-by-Wire"-Fahrzeugen, wobei "Drive-by-Wire" dafür steht, dass jede Antriebsstrangfunktion eines Fahrzeugs, inklusive Lenkung, ausschließlich über elektrische Signale gesteuert wird, müssen gegen Fehlerausfall besonders gesichert sein. Beispiele für "Drive-by-Wire"-Systeme in Fahrzeugen sind "Steer-by-Wire"-Systeme, bei denen keine permanente mechanische bzw. hydraulische Verbindung zwischen dem Lenkrad und der lenkbaren Fahrzeugrädern besteht, oder ESP-(Elektronisches Stabilitäts Programm)-Systeme, bei denen im fahrdynamischen Grenzbereich das Fahrverhalten des Fahrzeugs angepasst wird. Um die Ausfallsicherheit solcher "Drive-by-Wire"-Systeme zu erhöhen, werden diese Systeme redundant ausgelegt, so dass bei Ausfall beispielsweise eines Steuergerätes auf ein redundant ausgelegtes Steuergerät umgeschaltet werden kann.

Ein redundant ausgelegtes System ist ein System in dem ein Bauteil, beispielsweise ein Mikroprozessor, mehrfach vorhanden ist und auf diesen mehrfach vorhandenen Bauteilen dieselbe Funktion ausgeführt wird. Dies bedeutet insbesondere, dass von den Bauteilen dieselben Eingangsdaten verarbeitet und dieselben Ausgangsdaten erzeugt werden, wobei die Ausgangsdaten den Bauteilen zu Auswertungszwecken zugeordnet werden können.

Bekannte redundante Anordnungen sind das TRM-(Triple Modular Redundancy)-System und das Duo-Duplex-System.

Beim TRM-System, auch 2aus3-System genannt, werden drei redundante Bauteile derart gekoppelt, dass ein fehlerhaftes Bauteil erkannt werden kann und seine Auswirkung auf die Umgebung unterbunden wird.

Beim Duo-Duplex-System, auch Dual-Self-Checking-Pair-System genannt, werden jeweils zwei redundante Bauteile zu einem Kanal zusammengefasst, wobei innerhalb eines Kanals das Fehlverhalten eines Bauteils erkannt werden kann. Wird das Fehlverhalten eines Bauteils erkannt wird der korrespondierende Kanal abgeschalten.

Aus der EP 0 760 973 B1 ist ein Verarbeitungssystem in einem Flugzeugdrahtfernlenkungssteuersystem bekannt, worin jeder aus einer Mehrzahl von redundanten, asynchronen primären Flugcomputern Befehlssignale erzeugt, wobei wenigstens eine Steuerfläche des Flugzeugs durch eine Mehrzahl von Stellantrieben gesteuert wird. Das Verarbeitungssystem steuert die Flugbefehlssignale, welche zu den Stellantrieben übermittelt werden, und enthält eine Mehrzahl von Wählern, wobei jeder Wähler mit einem primären Flugcomputer und einem oder mehreren Stellantrieben zum Empfangen der Flugbefehlssignale von allen primären Flugcomputern verbunden ist, und Wählmittel zum Handeln gemäß einem vorbestimmten Wahlalgorithmus aufweist, um ein ausgewähltes Flugsignal zu übermitteln.

In der DE 196 31 309 A1 wird eine Mikroprozessoranordnung für ein Fahrzeugs-Regelungssystem, die mehrere, untereinander durch Bussysteme verbundene, redundant ausgelegte Mikroprozessorsysteme aufweist, offenbart. Die Datenverarbeitung in den Mikroprozessoren dient Regelungssystemen wie Blockierschutz- und/oder Antriebsschlupfregelung sowie der Eingangssignal-Aufbereitung. Die symmetrisch redundanten Ausgangs- und/oder Zwischenergebnisse der Datenverarbeitung werden verglichen. Bei Abweichung wird das betreffende System abgeschalten. Zusätzlich werden die in diesen Mikroprozessorsystemen ablaufenden Datenverarbeitungen jeweils mit den Ergebnissen einer vereinfachten Datenverarbeitung verglichen und auf Plausibilität geprüft. Im Falle von Diskrepanzen kann bei funktionswesentlichen Daten, die nicht "sicherheitskritisch" sind, das Regelungssystem zeitweise aufrechterhalten werden.

Redundante Systemfunktion eines Verkehrsmittels sind im Allgemeinen über mehrere Mikroprozessoren, welche auf einer Leiterplatine untergebracht, umgesetzt. Diese Umsetzung von redundanten Systemen hat den Vorteil der kurzen und schnellen Schaltwege zwischen den Mikroprozessoren. Der Nachteil ist, dass diese Umsetzung sehr hohe Entwicklungskosten und Entwicklungszeiten mit sich bringt. Dies ist insbesondere im Automobilbereich nachteilig, da dort heute immer kürzere Entwicklungszeiten für für die Generierung neuer Modelle gefordert werden.

Aus diesem Grunde sollten redundant ausgelegte Systeme im Automobilbereich aus Bauteilen zusammengesetzt werden, welche bereits auf dem Markt vorhanden sind und nur minimal adaptiert werden müssen, um ein Teil eines redundanten Systems zu sein. Als Bauteile bieten sich insbesondere bereits auf dem Markt befindliche Steuergeräte an.

Es ist nun die Aufgabe der vorliegenden Erfindung eine redundante Steuergeräteanordnung derart zu optimieren, dass Steuergeräte minimal als Teil eines redundanten Systems angepasst werden müssen.

Diese Aufgabe wird erfindungsgemäß durch die Merkmale des Anspruchs 1 und Anspruchs 10 gelöst. Danach ist jeder Datenbustrennschalter mit einer Signalleitung mindestens eines weiteren redundanten Steuergerätes verbunden. Ein weiteres redundantes Steuergerät überträgt ein Bewertungssignal an den einem ersten redundanten Steuergerät zugeordneten Datenbustrennschalter, wobei das Bewertungssignal das Ergebnis einer Funktionsprüfung des weiteren redundanten Steuergerätes bezüglich des ersten redundanten Steuergeräts ist. Der Datenbustrennschalter des ersten redundanten Steuergeräts unterbricht in Abhängigkeit des Ergebnisses einer Logikschaltung den Datenbus, wobei mindestens ein Eingangs-Signal der Logikschaltung von dem mindestens einen Bewertungssignal gebildet wird.

Die erfindungsgemäße Steuergeräteanordnung hat den Vorteil, dass Steuergeräte beliebiger Hersteller für den Aufbau einer redundanten Anordnung eingesetzt werden können.

Ein weiterer Vorteil ist, dass die Steuergeräteabschaltung bzw. die Trennung vom Datenbus unabhängig von dem auf den redundanten Steuergerät eingesetzten Wahlverfahren ist. Der Wahl- bzw. Voting-Prozess im redundanten Steuergerät zur Bewertung der weiteren redundanten Steuergeräte ist unabhängig von der gewählten Hardware bzw. Sorftware und kann individuell verändert werden. Wichtig ist nur das finale Bewertungssignal, welches an den Datenbustrennschalter des betreffenden bewerteten redundanten Steuergeräts übertragen werden muss.

Der Datenbustrennschalter ist unabhängig vom Steuergerät entwickelbar, da dieser keine funktionalen Anteile vom Steuergerät benötigt, noch das Steuergerät funktionale Anteile vom Datenbustrennschalter benötigt.

Vorteilhaft ist der einfache Aufbau der Steuergeräteanordnung sowie des Datenbustrennschalters, womit eine schnelle und kostengünstige Herstellung gewährleistet ist.

Da alle Ausgangsbelegungen des Datenbustrennschalters mittels aller Eingangsbelegungen einfach vollständig getestet werden können, ist der Datenbusschalter mit hoher Zuverlässigkeit herstellbar.

Da die Steuergeräteanordnung auf einer kleinsten Einheiten von zwei bezüglich einer Steuerfunktion redundanten Steuergeräten basiert, kann die Steuergeräteanordnung um weitere bezüglich dieser Steuerfunktion redundanten Steuergeräten erweitert werden. Somit lassen sich einfach TRM- und DuoDuplex-Anordnungen abbilden.

Die Steuergeräteanordnung, welche über einen ersten und zweiten Datenbus aufweist, hat den Vorteil, dass bei Unterbrechung eines Datenbusses diese Unterbrechung über eine Gateway-Schaltung überbrückt werden. Dies kann beispielsweise bei einem Datenbus-Kurzschluss oder einer Datenbus-Kabelunterbrechung eine schnelle Abhilfe sein.

Ein weiterer Vorteil der Steuergeräteanordnung mit dem zweiten zusätzlichen Datenbus ist, dass der erste Datenbus, über den die Kommunikation mit den weiteren Steuergeräten des Verkehrsmittels ausgeführt wird, nicht mit zusätzlichem Datenverkehr belastet wird.

Es gibt nun verschiedene Möglichkeiten, die Lehre der vorliegenden Erfindung in vorteilhafter Weise auszugestalten und weiterzubilden. Dazu ist einerseits auf die untergeordneten Ansprüche und andererseits auf die nachfolgende Erläuterung einer Ausführungsform zu verweisen. Es sollen auch die vorteilhaften Ausgestaltungen einbezogen sein, die sich aus einer beliebigen Kombination der Unteransprüche ergeben. In der Zeichnung ist eine Ausführungsform der erfindungsgemäßen Steuergeräteanordnung und des erfindungsgemäßen Datenbustrennschalters dargestellt. Es zeigen jeweils in schematischer Darstellung,
- Fig. 1: ein Blockschaltbild einer ersten Ausführungsform der erfindungsgemäßen Steuergeräteanordnung und
- Fig. 2: ein Blockschaltbild einer weiteren Ausführungsform der erfindungsgemäßen Steuergeräteanordnung.

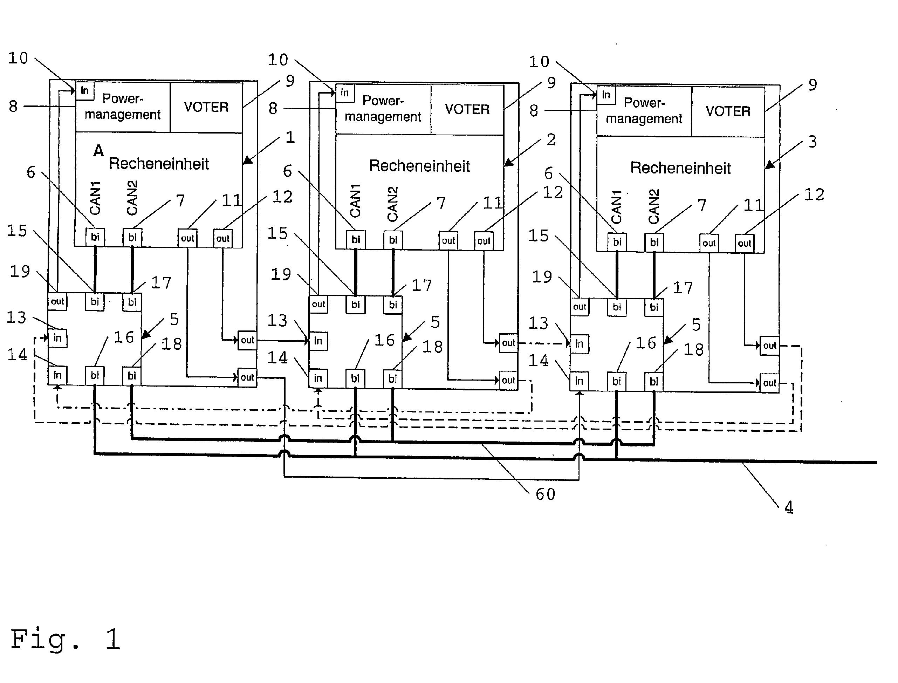

Die erfindungsgemäße Steuergeräteanordnung ist in Figur 1 abgebildet. Darin sind drei redundant bezüglich der ESP-(Elektronisches Stabilitäts Programm)-Steuerfunktion in einem Fahrzeug ausgelegte Steuergeräte 1, 2, 3 in einer TRM-(Triple Modular Redundancy)-Anordnung zusammengeschalten.

Die drei redundanten Steuergeräte 1, 2, 3 sind über einen ersten Datenbus 4 mit weiteren Steuergeräten des Fahrzeugs verbunden. Zusätzlich sind die drei redundanten Steuergeräte 1, 2, 3 über einen zweiten Datenbus 60 miteinander verbunden. Dieser Datenbus dient ausschließlich des Austausches der Ergebnissignale zwischen den drei redundant ausgelegten Steuergeräte 1, 2,3. Der erste und zweite Datenbus 4, 60 ist als CAN-(Controller Area Network)-Datenbus ausgeführt.

Damit verfügt jedes der drei redundant ausgelegten Steuergeräte 1, 2, 3 über zwei bidirektionale Datenbusanschlüsse 6, 7, wobei der Datenbusanschluss 6 der Verbindung zum ersten Datenbus 4 und der Datenbusanschluss 7 der Verbindung zum zweiten Datenbus 60 dient.

Die redundanten Steuergeräte 1, 2, 3 verfügen neben der Recheneinheit mit Prozessor und Speicher zur Durchführung der ESP-Steuerfunktion jeweils über eine Spannungsversorgungseinheit 8 und ein Wahlmittel 9.

Die Spannungsversorgungseinheit 8 der redundanten Steuergeräte 1, 2, 3 weist einen Eingangsport 10 auf. Über diesen Port 10 kann mittels eines Signals die Spannungsversorgung des Steuergeräts, also das Steuergerät selbst, abgeschalten werden.

Beispielhaft wird nun an einem Steuergerät 1 die Funktionsweise der erfindungsgemäßen Steuergeräteanordnung in Verbindung mit dem Datenbustrennschalter 5 erläutert. Die weiteren Steuergeräte 2, 3 funktionieren äquivalent.

Das Steuergerät 1 verarbeitet Eingangsdaten, welche es über den ersten Datenbus 4 von weiteren an den Datenbus 4 angeschlossenen Steuergeräten, Aktoren, Sensoren usw. erhält. Für die ESP-Steuerfunktion sind diese Eingangsdaten die Gierrate, die Geschwindigkeit, die Motordrehzahl und die Beschleunigung des Fahrzeugs.

Diese Eingangsdaten werden vom Regelwerk des Steuergeräts 1 verarbeitet und Ausgangsdaten erzeugt. Diese Ausgangsdaten werden auf den zweiten Datenbus 60 gelegt, wo sie von den weiteren Steuergeräten 2, 3 erfasst werden. Das Steuergerät 1 seinerseits erfasst die Ausgangsdaten der weiteren Steuergeräte 2, 3.

Das Wahlmittel 9, auch Voter genannt, dient dazu aus mehreren Vergleichsoperation der eigenen Ausgangsdaten mit den empfangenen Ausgangsdaten der weiteren Steuergeräte 2, 3 eine Bewertung auszuführen. Das Wahlmittel, welches softwaretechnisch umgesetzt ist, ist hierbei so ausgelegt, dass zeitliche und betragsmäßige Abweichungen der Ausgangsdaten erlaubt sind.

Der Wahlprozess in dem TRM-System geht folgendermaßen vor: Bei Nicht-Übereinstimmung aller drei Ausgangsdaten wird das System abgeschaltet. Bei Übereinstimmung von zwei Ausgangsdaten liegt ein Einfachfehler vor und die übereinstimmenden Ausgangsdaten werden als korrektes Ausgangsdatum übernommen. Bei Übereinstimmung aller drei Ausgangsdaten liegt kein Fehler vor. Jedes Ausgangsdatum kann als Größe übernommen werden.

Nach Abschluss des Wahlprozesses ordnet das Wahlmittel 9 den gesendeten Ausgangssignalen der weiteren Steuergeräte 2, 3 jeweils ein Bewertungssignal zu.

Nur ein ausgezeichnetes A der drei redundanten Steuergeräte 1, 2, 3, hier das Steuergerät 1, ist das Steuergerät, welches sein Ausgangssignal nach dem Wahlprozess auf den ersten Datenbus 4 zur Befehlsübermittlung an die weiteren an den Datenbus 4 angeschlossenen Steuergeräte sendet. Wurde nach einem Wahlprozess festgestellt, dass das Steuergerät 1 fehlerhaft arbeitet, übernimmt eines der weiteren Steuergeräte 2, 3 die Aufgabe das nach dem Wahlprozess ermittelte Ausgangsdatum auf den ersten Datenbus 4 zu senden. Hierzu ist im Wahlmittel ein Parameter hinterlegt, der angibt, welches Steuergerät der redundant ausgelegten Steuergeräte 1-3 diese Funktion übernimmt.

Das Steuergerät 1 in Figur 1 weist zwei Ausgangsports 11, 12 auf, die zur Übermittlung der Bewertungssignale der Ausgangsdaten der weiteren redundanten Steuergeräte 2, 3 dienen. Diese Ausgangsports 11, 12 sind über eine jeweilige Signalleitung mit den Eingangsports 13, 14 der jeweiligen Datenbustrennschalter 5 der weiteren Steuergeräte 2, 3 verbunden. Über diese Signalleitung wird das Bewertungssignal an die jeweiligen Datenbustrennschalter der Steuergeräte 2, 3 übermittelt.

Der Datenbustrennschalter 5 weist jeweils zwei über Schalter verbundene bidirektionale Datenbusanschlüsse 15, 16 bzw. 17, 18 auf. Die Datenbusanschlüsse 15-18 sind derart geschalten, dass diese die Verbindung des Steuergeräts 1 zum ersten Datenbus 4 über die Anschlüsse 15, 16 und zum zweiten Datenbus 60 über die Anschlüsse 17, 18 herstellt oder trennt.

Der Datenbustrennschalter 5 weist zusätzlich eine LogikSchaltung auf, deren Eingangssignale von den Eingangports 13, 14 des Datenbustrennschalters 5 gebildet werden. An den Eingangsports 13, 14 des Datenbustrennschalters 5 werden die Bewertungssignale der weiteren Steuergeräte 2, 3 über die Ausgangssignale des Steuergeräts 1 übermittelt.

Die Logikschaltung des Datenbustrennschalters 5 besteht aus einem ODER-Gatter. Die an den Eingangports 13, 14 ankommenden Bewertungssignale haben entweder den Wert Null für Nicht-Übereinstimmung oder den Wert Eins für Übereinstimmung der Ausgangssignale. In Abhängigkeit des Ergebnisses der LogikSchaltung, also Null für fehlerhaftes Steuergerät 1 oder Eins für fehlerfreies Steuergerät 1, trennt der Datenbustrennschalter im Fehlerfall die Verbindung zwischen den Datenbusanschlüssen 15, 16 bzw. 17, 18. Damit ist das Steuergerät 1 im Fehlerfall von der Kommunikation über den ersten und zweiten Datenbus 4, 60 abgetrennt.

Zusätzlich weist der Datenbustrennschalter einen Ausgangsport 19 auf. Dieser Ausgangsport 19 des Steuergeräts 1 ist über eine Signalleitung mit dem Eingangsport 10 der Spannungsversorgung des Steuergeräts 1 verbunden. Im Fehlerfall sendet der Datenbustrennschalter 5 zusätzlich ein Signal über den Ausgangsport 19 des Datenbustrennschalters 5 an den Eingangsport 10 der Spannungsversorgung 8, welches die Spannungsversorgung 8 des Steuergeräts 1 und damit das Steuergerät 1 selbst abschaltet.

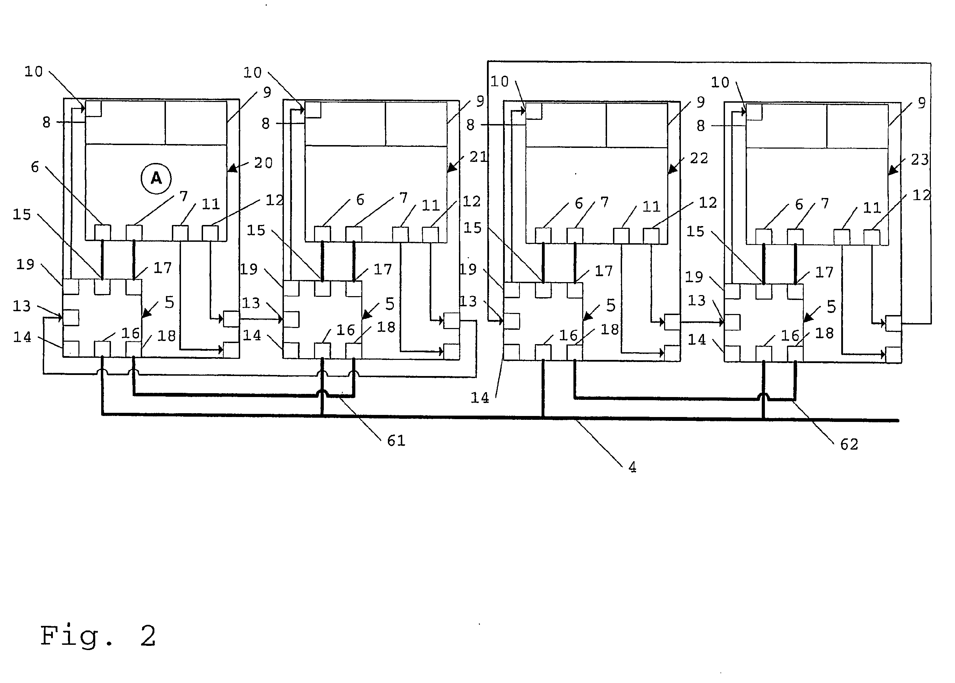

In Figur 2 ist eine weiter Ausführungsform der erfindungsgemäßen Steuergeräteanordnung abgebildet. Darin sind vier redundant bezüglich der ESP-(Elektronisches Stabilitäts Programm)-Steuerfunktion in einem Fahrzeug ausgelegten Steuergeräte 20-23 in einer Duo-Duplex-Anordnung zusammengeschalten. Die vier redundanten Steuergeräte 20-22 in Figur 2 sind über einen ersten Datenbus 4 mit weiteren Steuergeräten des Fahrzeugs verbunden.

Wie eingangs ausgeführt, werden bei einer Duo-Duplex-Anordnung jeweils zwei redundante Steuergeräte der vier bezüglich der ESP-Steuerfunktion redundant ausgelegten Steuergeräte zu einem logischen Kanal zusammengefasst. Also benötigt die Duo-Duplex-Anordnung im Gegensatz zur TRM-Anordnung einen zweiten unabhängigen Datenbus für den jeweiligen Kanal.

Damit sind jeweils zwei, 20,21 bzw. 22,23 der vier redundanten Steuergeräte 20-23 in Figur 2 über einen zweiten Datenbus 61 bzw. 62 miteinander verbunden. Die beiden zweiten Datenbusse 61, 62 dienen ausschließlich dem Austausch der Ergebnissignale zwischen jeweils zwei der vier redundant ausgelegten Steuergeräte 20-23. Der Datenbusse 4, 61, 62 sind als CAN-(Controller Area Network)-Datenbus ausgeführt.

Beispielhaft wird nun an dem Steuergerätepaar 20, 21 die Funktionsweise der erfindungsgemäßen Steuergeräteanordnung in der Duo-Duplex-Anordnung erläutert. Das weitere Steuergerätepaar 22, 23 funktioniert äquivalent. Auf Funktionsweisen der einzelnen Komponenten soweit dies bereits in der Figur 1 erläutert wurde, wird nicht mehr eingegangen.

Das Wahlmittel 9 des Steuergeräts 20 in einem Paar der Duo-Duplex-Anordnung führt Vergleichsoperationen nur bezüglich Ergebnissignalen des einen weiteren Steuergeräts 21 aus. Damit liefert das Steuergerät 20 nur ein Bewertungssignal, welches mittels einer Signalleitung vom den Ausgangsport 12 an den Eingangsport 13 des Datenbustrennschalters 5 des Steuergeräts 21 an den Datenbustrennschalter übermittelt wird.

Der Datenbustrennschalter 5 des Steuergeräts 20 erhält über den Eingangsport 13 das Bewertungssignal des Steuergeräts 21 bezüglich der Ausgangsdaten des Steuergeräts 20. Die Logikschaltung des Datenbustrennschalters 5 hat als ein Eingangssignal das Bewertungssignal auf dem Eingangsport 13. Das zweite Eingangssignal vom zweiten Eingangsport 14 wird fest vorgegeben. Hier wird als zweites Eingangssignal der Wert "Null" festgelegt.

Der Datenbustrennschalter 5 des Steuergeräts 20 trennt wie oben ausgeführt im Fehlerfall das Steuergerät 20 von der Kommunikation zum ersten und zweiten Datenbus 4, 61. Zudem wird die Spannungsversorgung 8 des Steuergeräts 20 abgeschalten. Fällt ein Steuergerät eines Steuergerätepaares 20, 21 bzw. 22, 23 aus, so wird das Paar 20, 21 bzw. 22, 23 abgeschalten. Dies ist leicht einzusehen, da beispielsweise in dem Abschalten des ersten Steuergeräts 20 des Paares das zweite Steuergerät 21 kein Ausgangssignal eines redundant ausgeführten Steuergeräts über den zweiten Datenbus 61 erhalten würde und damit nicht in der Lage wäre sein Ausgangssignal zu vergleichen.

Das Steuergerät 20 ist das ausgewählte Steuergerät A, welches sofern kein Fehler vorliegt das Ergebnissignal auf den ersten Datenbus 4 überträgt. Fällt das Steuergerät 20 aus wird das Paar 20, 21 abgeschaltet. Da das Steuergerätepaar 22, 23 über den ersten Datenbus 4 überwacht, ob das Steuergerät 20 die Ausgangsdaten auf den Datenbus 4 sendet, übernimmt eines der beiden Steuergeräte 22, 23 die Funktion des Sendens des Ergebnissignals auf den Datenbus 4.

Die Logikschaltung des Datenbustrennschalters 5 ist hardwaremäßig ausgeführt. Die schaltbare Verbindung zwischen den Ports 15, 16 bzw. 17, 18 ist als Logikbausteinschalter ausgeführt. Die schaltbare Verbindung kann aber auch als Relaisschalter ausgeführt sein.

Die bidirektionalen Anschlüsse 15-18 können derart gestaltet sein, dass beispielsweise das Twisted-Pair-Kabel des CAN-Datenbusses durchgeschleift ist oder dass jeweils eine entsprechende Sende-/Empfangseinheit wie beispielsweise ein CAN-Transceiver an den Datenbusanschlussstellen 15-18 angebracht ist.

Die Datenbusse 4, 60-62 sind als CAN-Datenbusse ausgelegt. Diese könnten aber auch als optische Datenbusse wie D2B bzw. MOST oder als TTP, LIN, FlexRay, Firewire usw. ausgeführt sein.

Die erfindungsgemäße Steuergeräteanordnung weist einen zweiten Datenbus 60-62 zu internen Kommunikation zwischen den für eine Steuerfunktion redundant ausgelegten Steuergeräten 1-3, 20-23 auf. Dies ist so gewählt, da der erste CAN-Datenbus 4, welcher die Kommunikation mit den weiteren Steuergeräten im Fahrzeug gewährleistet, im Allgemeinen in seiner Bandbreite bereits ausgelastet ist und keine zusätzlicher Datenverkehr, wie er für die interne Kommunikation zwischen den redundant ausgelegten Steuergeräte 1-3, 20-23 benötigt wird, mehr möglich ist.

Erlaubt das gewählte Datenbussytem eine entsprechend große Bandbreite, so dass die zusätzliche Kommunikation zwischen den redundant ausgelegten Steuergeräten 1-3, 20-23 mit der entsprechenden Geschwindigkeit gewährleist ist, ist der zweite Datenbus 60-62 nicht mehr nötig. Die Kommunikation zwischen den Steuergeräten des Fahrzeugs sowie die Kommunikation zwischen den redundant ausgelegten Steuergeräten 1-3, 20-23 läuft dann nur über den ersten Datenbus 4.

Die Steuergeräteanordnung ist ideal bei asynchroner Kommunikation der Steuergeräte. Arbeiten die Steuergeräte synchron, also senden diese nur zu einer bestimmten Zeit, wobei die Zeit über eine Gesamtsystemzeit genormt ist, hat dies den Nachteil, dass ein Ausfall des Synchronisationsmechanismusses sich auf alle Steuergeräte der redundanten Anordnung auswirkt und die gesamte redundante Anordnung damit ausfällt.

Die redundant ausgelegten Steuergeräte 1-3, 20-23 können von unterschiedlichen Herstellern stammen bzw. auf unterschiedlicher Hardware aufgebaut sein.

Das Wahlmittel 9 der redundanten Steuergeräte 1-3, 20-23 kann unterschiedliche Wahlprozesse einsetzen, um das Bewertungssignal zu erhalten.

## Patentansprüche

1. Steuergeräteanordnung mit mehreren über einen ersten Datenbus (4) vernetzten Steuergeräten (1-3, 20-23), welche
- Komponenten eines Verkehrsmittels steuern und
- untereinander Informationen über den ersten Datenbus (4) austauschen, wobei
- bezüglich einer Steuerfunktion redundant ausgelegte Steuergeräte (1-3; 20-23) vorhanden sind und
- den redundant ausgelegten Steuergeräten (1-3; 20-23) jeweils ein Datenbustrennschalter (5) zugeordnet ist, welcher den Datenbus (4) abhängig von einem Bewertungssignal durchschaltet oder unterbricht, so dass die Datenbuskommunikation aktiviert bzw. deaktiviert ist,
**dadurch gekennzeichnet ,**
**dass**
- jeder dieser Datenbustrennschalter (5) mit einer Signalleitung mindestens eines weiteren redundanten Steuergerätes (1-3; 20-23) verbunden ist, dass
- ein weiteres redundantes Steuergerät (2,3; 21; 23) ein Bewertungssignal an den einem ersten redundanten Steuergerät (1; 20; 22) zugeordneten Datenbustrennschalter (5) überträgt, wobei das Bewertungssignal das Ergebnis einer Funktionsprüfung des weiteren redundanten Steuergerätes (2,3; 21; 23) bezüglich des ersten redundanten Steuergeräts (1; 20; 22) ist und
- der Datenbustrennschalter (5) des ersten redundanten Steuergeräts (1; 20; 22) in Abhängigkeit des Ergebnisses einer Logikschaltung den Datenbus (4) unterbricht, wobei mindestens ein Eingangs-Signal der Logikschaltung von dem mindestens einen Bewertungssignal gebildet wird.

2. Steuergeräteanordnung nach Anspruch 1,
**dadurch gekennzeichnet ,**
**dass** die bezüglich einer Steuerfunktion redundant ausgelegten Steuergeräte (1-3; 20-23) über einen zweiten Datenbus (60-62) zum Austausch der Ergebnissignale der Steuerfunktion verbunden sind.

3. Steuergeräteanordnung nach Anspruch 1 oder 2,
**dadurch gekennzeichnet ,**
**dass** das Senden des Ergebnissignals der Steuerfunktion auf den ersten Datenbus (4) mittels eines vorgebbaren Steuergerätes (A) aus den bezüglich einer Steuerfunktion redundant ausgelegten Steuergeräte (1-3; 20-23) erfolgt.

4. Steuergeräteanordnung nach Anspruch 3,
**dadurch gekennzeichnet ,**
**dass** das eine vorgebbare Steuergerät (A) mittels eines Parameters in den bezüglich einer Steuerfunktion redundant ausgelegten Steuergeräte (1-3; 20-23) festlegbar ist.

5. Steuergeräteanordnung nach Anspruch 4,
**dadurch gekennzeichnet ,**
**dass** der Parameter die Rangfolge des Ersatzes für das eine Steuergerät (A) aus den bezüglich einer Steuerfunktion redundant ausgelegten Steuergeräte ersetzenden Steuergeräte (1-3; 20-23) abbildet.

6. Steuergeräteanordnung nach Anspruch 2 bis 5,
**dadurch gekennzeichnet ,**
**dass** die bezüglich einer Steuerfunktion redundant ausgelegten Steuergeräte (1-3; 20-23) über eine Gateway-Funktion verfügen, so dass bei Unterbrechung eines Datenbusses (4; 60-62) der Datenaustausch mittels der Gateway-Funktionalität über den weiteren (60-62; 4) Datenbus aufrechterhalten wird.

7. Steuergeräteanordnung nach Anspruch 1 bis 6,
**dadurch gekennzeichnet ,**
**dass**
- der Datenbustrennschalter (5) mindestens einen Eingangsport (13, 14) für das Bewertungssignal mindestens eines weiteren Steuergerätes (2,3; 21; 23) aufweist und
- die Verbindung für den Datenbus (4) mittels einer Logikschaltung gesteuert schaltbar ist, wobei
- mindestens ein Bewertungssignal ein Eingangs-Signal der Logikschaltung bildet, um abhängig von dem Ergebnis der Logikschaltung
- die Kommunikation des zugeordneten Steuergeräts (1; 20; 22) zum ersten Datenbus (4) zu trennen.

8. Steuergeräteanordnung nach Anspruch 7,
**dadurch gekennzeichnet ,**
**dass**
- der Datenbustrennschalter (5) einen Ausgangsport (19) aufweist, welcher über eine Signalleitung mit der Spannungsversorgung (8) des zugeordneten Steuergeräts (1; 20; 22) verbunden ist und
- **dass** abhängig von dem Ergebnis der Logikschaltung ein Steuersignal über die Signalleitung gesendet wird, welches das zugeordnete Steuergerät (1; 20; 22) von der Spannungsversorgung (8) trennt.

9. Steuergeräteanordnung nach Anspruch 7 oder 8,
**dadurch gekennzeichnet ,**
**dass** die schaltbare Verbindung als
- Relaisschalter oder
- als Logikbaustein ausgebildet ist.

10. Datenbustrennschalter (5) mit einer schaltbaren elektrischen Verbindung für einen Datenbus (4, 60-62), wobei
- der Datenbus (4, 60-62) von einer Sende-/Empfangseinheit eines der Sende-/Empfangseinheit zugeordneten Steuergeräts (1-3, 20-22) mit einem Datenbusanschluss (15, 17) des Datenbustrennschalters (5) verbunden ist,
**dadurch gekennzeichnet ,**
**dass**
- der Datenbustrennschalter (5) mindestens einen Eingangsport (13, 14) für das Bewertungssignal mindestens eines weiteren Steuergerätes (2,3; 21; 23) aufweist,
- einen Ausgangsport (19) aufweist, welcher über eine Signalleitung mit der Spannungsversorgung 8 des zugeordneten Steuergeräts (1; 20; 22) verbunden ist, und
- die Verbindung mittels einer Logikschaltung schaltbar ist, wobei
- mindestens ein Bewertungssignal ein Eingangs-Signal der Logikschaltung bildet, um abhängig von dem Ergebnis der Logikschaltung
- die Kommunikation des Steuergeräts (1; 20; 22) zum Datenbus (4, 60-62) zu trennen und
- ein Steuersignal über die Signalleitung zu senden, welches das Steuergerät (1; 20; 22) von der Spannungsversorgung (8) trennt.

11. Datenbustrennschalter nach Anspruch 10,
**dadurch gekennzeichnet ,**
**dass** die schaltbare Verbindung als
- ein Relaisschalter oder
- als Logikbaustein ausgebildet ist.

## Claims

1. Array of control devices having a plurality of control devices (1 - 3, 20 - 23) which are interconnected via a first data bus (4) and which
- control components of a means of transportation, and
- exchange information with one another via the first data bus (4),
- control devices (1 - 3; 20 - 23) which are of redundant configuration with respect to a control function being provided, and
- in each case a data bus isolating switch (5) being assigned to the control devices (1 - 3; 20 - 23) which are of redundant configuration, said data bus isolating switch (5) connecting or disconnecting the data bus (4) as a function of an evaluation signal, with the result that the data bus communication is activated or deactivated,
**characterized in that**
- each of these data bus isolating switches (5) is connected to a signal line of at least one further redundant control device (1 - 3; 20 - 23), **in that**
- a further redundant control device (2, 3; 21; 23) transmits an evaluation signal to the data bus isolating switch (5) which is assigned to a first redundant control device (1; 20; 22), the evaluation signal being the result of functional checking of the further redundant control device (2, 3; 21; 23) with respect to the first redundant control device (1; 20; 22), and
- the data bus isolating switch (5) of the first redundant control device (1; 20; 22) disconnecting the data bus (4) as a function of the result of a logic circuit, at least one input signal of the logic circuit being formed by the at least one evaluation signal.

2. Array of control devices according to Claim 1, **characterized in that** the control devices (1 - 3; 20 - 23) which are of redundant configuration with respect to a control function are connected via a second data bus (60 - 62) in order to exchange the result signals of the control function.

3. Array of control devices according to Claim 1 or 2, **characterized in that** the result signal of the control function is transmitted to the first data bus (4) via a predefinable control device (A) from the control devices (1 - 3; 20 - 23) which are of redundant configuration with respect to a control function.

4. Array of control devices according to Claim 3, **characterized in that** one predefinable control device (A) can be defined via a parameter in the control devices (1 - 3; 20 - 23) which are of redundant configuration with respect to a control function.

5. Array of control devices according to Claim 4, **characterized in that** the parameter maps the sequence of the replacement for one control device (A) from the control devices (1 - 3 20 - 23) which form a replacement for control devices which are of redundant configuration with respect to a control function.

6. Array of control devices according to Claims 2 to 5, **characterized in that** the control devices (1 - 3; 20 - 23) which are of redundant configuration with respect to a control function have a gateway function, with the result that when a data bus (4; 60 - 62) is disconnected, the exchange of data is maintained via the further data bus (60 - 62; 4) by means of the gateway functionality.

7. Array of control devices according to Claims 1 to 6, **characterized in that**
- the data bus isolating switch (5) has at least one input port (13, 14) for the evaluation signal of at least one further control device (2, 3; 21; 23), and
- the connection for the data bus (4) can be switched in a controlled fashion via a logic circuit,
- at least one evaluation signal forming an input signal of the logic circuit in order to disconnect
- the communication of the assigned control device (1; 20; 22) to the first data bus (4)
as a function of the result of the logic circuit.

8. Array of control devices according to Claim 7,
**characterized in that**
- the data bus isolating switch (5) has an output port (19) which is connected to the voltage supply (8) of the assigned control device (1; 20; 22) via a signal line, and
- **in that** a control signal is transmitted via the signal line as a function of the result of the logic circuit and disconnects the assigned control device (1; 20; 22) from the voltage supply (8).

9. Array of control devices according to Claim 7 or 8, **characterized in that** the switchable connection is embodied as
- a relay switch or
- as a logic module.

10. Data bus isolating switch (5) having a switchable electrical connection for a data bus (4, 60 - 62),
- the data bus (4, 60 - 62) being connected to a data bus connection (15, 17) of the data bus isolating switch (5) by a transceiver unit of a control device (1 - 3, 20 - 22) which is assigned to the transceiver unit, **characterized in that**
- the data bus isolating switch (5) has at least one input port (13, 14) for the evaluation signal of at least one further control device (2, 3; 21; 23),
- has an output port (19) which is connected to the voltage supply (8) of the assigned control device (1; 20; 22) via a signal line, and
- the connection can be switched via a logic circuit,
- at least one evaluation signal forming an input signal of the logic circuit in order
- to disconnect the communication of the control device (1; 20; 22) with the data bus (4, 60 - 62) and
- to transmit, via the signal line, a control signal which disconnects the control device (1; 20; 22) from the voltage supply (8),
as a function of the result of the logic circuit.

11. Data bus isolating switch according to Claim 10,
**characterized in that** the switchable connection is embodied as
- a relay switch or
- as a logic module.

## Revendications

1. Arrangement d'appareils de commande comprenant plusieurs appareils de commande (1-3, 20-23) mis en réseau par le biais d'un premier bus de données (4), lesquels
- commandent les composants d'un moyen de communication et
- échangent entre eux des informations par le biais du premier bus de données (4),
- des appareils de commande (1-3 ; 20-23) conçus de manière redondante par rapport à une fonction de commande étant présents et
- un sectionneur de bus de données (5) étant à chaque fois associé aux appareils de commande (1-3 ; 20-23) conçus de manière redondante, lequel rend passant ou interrompt le bus de données (4) en fonction d'un signal d'évaluation de telle sorte que la communication sur le bus de données soit activée ou désactivée, **caractérisé en ce que**
- chacun de ces sectionneurs de bus de données (5) est relié avec une ligne de signal d'au moins un appareil de commande (1-3; 20-23) redondant supplémentaire, que
- un appareil de commande (2, 3 ; 21 ; 23) redondant supplémentaire transmet un signal d'évaluation au sectionneur de bus de données (5) associé à un premier appareil de commande (1 ; 20 ; 22) redondant, le signal d'évaluation étant le résultat d'un contrôle du fonctionnement de l'appareil de commande (2, 3 ; 21 ; 23) redondant supplémentaire par rapport au premier appareil de commande (1 ; 20 ; 22) redondant et
- le sectionneur de bus de données (5) du premier appareil de commande (1 ; 20 ; 22) redondant interrompt le bus de données (4) en fonction du résultat d'un circuit logique, au moins un signal d'entrée du circuit logique étant formé par l'au moins un signal d'évaluation.

2. Arrangement d'appareils de commande selon la revendication 1, **caractérisé en ce que** les appareils de commande (1-3 ; 20-23) conçus de manière redondante par rapport à une fonction de commande sont reliés par le biais d'un deuxième bus de données (60-62) pour échanger les signaux de résultat de la fonction de commande.

3. Arrangement d'appareils de commande selon la revendication 1 ou 2, **caractérisé en ce que** l'émission du signal de résultat de la fonction de commande sur le premier bus de données (4) s'effectue au moyen d'un appareil de commande (A) pouvant être prédéfini parmi les appareils de commande (1-3 ; 20-23) conçus de manière redondante par rapport à une fonction de commande.

4. Arrangement d'appareils de commande selon la revendication 3, **caractérisé en ce que** l'appareil de commande (A) pouvant être prédéfini peut être défini au moyen d'un paramètre dans les appareils de commande (1-3 ; 20-23) conçus de manière redondante par rapport à une fonction de commande.

5. Arrangement d'appareils de commande selon la revendication 4, **caractérisé en ce que** le paramètre représente la hiérarchie de substitution pour l'appareil de commande (A) parmi les appareils de commande (1-3; 20-23) remplaçant les appareils de commande conçus de manière redondante par rapport à une fonction de commande.

6. Arrangement d'appareils de commande selon les revendications 2 à 5, **caractérisé en ce que** les appareils de commande (1-3 ; 20-23) conçus de manière redondante par rapport à une fonction de commande disposent d'une fonction de passerelle de sorte qu'en cas d'interruption d'un bus de données (4 ; 60-62), l'échange de données est maintenu au moyen de la fonctionnalité de passerelle par le biais de l'autre (60-62 ; 4) bus de données.

7. Arrangement d'appareils de commande selon les revendications 1 à 6, **caractérisé en ce que**
- le sectionneur de bus de données (5) présente au moins un port d'entrée (13, 14) pour le signal d'évaluation d'au moins un appareil de commande supplémentaire (2, 3 ; 21 ; 23) et
- la liaison pour le bus de données (4) peut être commutée en étant commandée au moyen d'un circuit logique,
- au moins un signal d'évaluation formant un signal d'entrée du circuit logique afin de, en fonction du résultat du circuit logique,
- couper la communication de l'appareil de commande associé (1 ; 20 ; 22) vers le premier bus de données (4).

8. Arrangement d'appareils de commande selon la revendication 7, **caractérisé en ce que**
- le sectionneur de bus de données (5) présente un port de sortie (19), lequel est relié avec l'alimentation électrique (8) de l'appareil de commande associé (1 ; 20 ; 22) par le biais d'une ligne de signal et
- qu'en fonction du résultat du circuit logique, un signal de commande est envoyé par le biais de la ligne de commande, lequel déconnecte l'appareil de commande associé (1; 20; 22) de l'alimentation électrique (8).

9. Arrangement d'appareils de commande selon la revendication 7 ou 8, **caractérisé en ce que** la liaison commutable est réalisée sous la forme d'un commutateur à relais ou d'un composant logique.

10. Sectionneur de bus de données (5) comprenant une liaison électrique commutable pour un bus de données (4, 60-62),
- le bus de données (4, 60-62) étant relié par une unité d'émission/réception d'un appareil de commande (1-3 ; 20-22) associé à l'unité d'émission/réception avec une borne de bus de données (15, 17) du sectionneur de bus de données (5),
**caractérisé en ce que**
- le sectionneur de bus de données (5) présente au moins un port d'entrée (13, 14) pour le signal d'évaluation d'au moins un appareil de commande supplémentaire (2, 3 ; 21 ; 23),
- présente un port de sortie (19), lequel est relié avec l'alimentation électrique (8) de l'appareil de commande associé (1 ; 20 ; 22) par le biais d'une ligne de signal et
- la liaison est commutable au moyen d'un circuit logique,
- au moins un signal d'évaluation formant un signal d'entrée du circuit logique afin de, en fonction du résultat du circuit logique,
- couper la communication de l'appareil de commande (1 ; 20 ; 22) vers le bus de données (4, 60-62) et
- envoyer un signal de commande par le biais de la ligne de commande, lequel déconnecte l'appareil de commande (1 ; 20 ; 22) de l'alimentation électrique (8).

11. Sectionneur de bus de données selon la revendication 10, **caractérisé en ce que** la liaison commutable est réalisée sous la forme d'un commutateur à relais ou d'un composant logique.
